# EUROPÄISCHE PATENTSCHRIFT

(11) **EP 0 654 505 B1**
(45) Veröffentlichungstag und Bekanntmachung des Hinweises auf die Patenterteilung: **03.03.1999**
(21) Anmeldenummer: 94117897.2
(22) Anmeldetag: 12.11.1994
(51) Int. Cl.: C08L 71/12, C08L 77/00, C08G 65/46

(54) **PPE/PA-Formmassen zur Herstellung von Formkörpern mittels Blasformen, Profilextrusion und Rohrextrusion**
Polyphenylene/polyamide compositions for blow moulding, profile extrusion and tubular extrusion
Compositions de polyphénylenéther et polyamide pour la fabrication d'articles par soufflage, extrusion de profile ou extrusion tubulaire

(30) Priorität: 22.11.1993 DE 4339509
(43) Veröffentlichungstag der Anmeldung: 24.05.1995
(73) Patentinhaber: BASF Aktiengesellschaft, 67063 Ludwigshafen (DE)
(72) Erfinder: Götz, Walter, Dr., D-67067 Ludwigshafen (DE); Gottschalk, Axel, Dr., D-67435 Neustadt (DE)

(56) Entgegenhaltungen:
- EP-A- 0 320 725
- EP-A- 0 480 228
- EP-A- 0 501 154
- DE-A- 1 520 250

## Beschreibung

Die Erfindung betrifft
Hochmolekulare thermoplastische Formmassen, erhältlich durch Einmischen von
A) 20 - 80 Gew.-% eines Polyphenylenethers und
3) 0 - 70 Gew.-% üblicher Zusatzstoffe und verarbeitungshilfsmittel
in eine Schmelze von
C) 10 - 80 Gew.-% eines niedermolekularen Polyamids mit einer Viskositätszahl von 40 bis 185 ml/g, gemessen an einer 0,5 gew.-%igen Lösung in konzentrierter Schwefelsäure bei 25°C gemäß DIN 53727,
und anschließender Nachkondensation in fester Phase, wobei man die Nachkondensation bei Temperaturen unterhalb des Schmelzpunktes der reinen komponente C) unter Inertgasbedingungen thermisch durchführt und wobei das Polyamid C) nach der Nachkondensation in fester Phase eine Viskositätszahl von mindestens 200 ml/g, bestimmt nach Abtrennung der Polyphenylenether-Phase mittels Extraktion mit Toluol an einer 0,5 gew.-%igen Lösung in 96 %iger Schwefelsäure bei 25°C gemäß DIN 53727, aufweist.

Weiterhin betrifft die Erfindung ein Verfahren zur Herstellung von erfindungsgemäßen Formmassen sowie deren Verwendung zur Herstellung von Formkörpern und die hieraus erhältlichen Formkörper.

Polyamid/Polyphenylenether Blends sind u.a. aus den EP-A 24120, 46040, 244090 und 262961 bekannt. PPE/PA Blends sind Mischungen zweier nicht verträglicher Polymere, die in vielen Bereichen Anwendung finden, da sie ein insgesamt interessantes Eigenschaftsspektrum aufweisen.

Entsprechend werden in einer Vielzahl von Anmeldungen Möglichkeiten beschrieben, die Phasenhaftung der unterschiedlichen Polymermatrices zu verbessern.

Die bekannten Blends lassen sich aber nur bedingt zu Blasformkörpern verarbeiten. Beim Blasformen wird allgemein ein Schlauch aus der Polymerschmelze extrudiert, der zwischen den beiden Halbschalen des geöffneten Werkzeuges hängt. Anschließend wird das Werkzeug geschlossen und der Polymerschlauch durch Gas-Innendruck gegen das Werkzeug gepreßt, abgekühlt und entformt.

Wesentliche Voraussetzung bei dieser Verarbeitung ist, daß der Polymerschlauch beim Extrudieren in den Zeiträumen, wo er frei zwischen den Werkzeugen hängt, nicht abreißt, so daß der Formungsvorgang zu Ende geführt werden kann. Wünschenswert ist darüber hinaus auch, daß der Schlauch nicht "durchhängt", da hierbei geringe Wandstärken in der oberen Hälfte und dickere Wandstärken in der unteren Hälfte entstehen. Hohlkörper mit unterschiedlichen Wandstärken sind zur Verwendung nicht geeignet, da die Belastbarkeit in der Regel von der Stelle mit der geringsten Wandstärke begrenzt wird. Die bekannten PPE/PA-Formmassen eignen sich daher nur sehr beschränkt für das Blasformverfahren, da die Schlauchfestigkeit zu gering ist.

Beide Faktoren werden von der sog. Schmelzesteifigkeit, die in erster Linie von der Schmelzeviskosität abhängt, bestimmt. Ideal wäre eine hohe Schmelzeviskosität bei geringer Scherung - d.h. nach der Extrusion - aber eine niedrige Schmelzeviskosität unter hohem Schergefälle - d.h. im Verarbeitungsextruder.

Folglich werden zum Blasformen üblicherweise hochmolekulare Polymere eingesetzt.

Das Konfektionieren hochmolekularer PPE/PA-Blends, insbesondere unter Mitverwendung von Glasfasern ist aber nicht möglich, da beim Konfektionieren ein Molekulargewichtsabbau des Polyamids eintritt, so daß - auch bei Verwendung von hochmolekularem Polyamid als Ausgangspolymeren - in jedem Fall zum Blasformen ungeeignete Massen entstehen.

Setzt man als Ausgangspolymer hochmolekulares PPE mit einem Polyamid üblicher Viskosität um, sind die Schmelzeviskositäten bei der Verarbeitung zum Blend so hoch, daß die Dispergierung des PPE's nicht ausreichend ist. Entsprechend werden hierbei Blends mit schlechten Eigenschaften erhalten, da das Polyamid in diesen Blends die Matrix bildet, in welcher das PPE dispergiert vorliegt.

Der vorliegenden Erfindung lag daher die Aufgabe zugrunde, hochmolekulare PPE/PA-Blends zur Verfügung zu stellen, die sich verstärkt und unverstärkt problemlos zu Blasformkörpern, Profilextrudaten oder Rohrextrudaten verarbeiten lassen, so daß insbesondere Formkörper mit großem Volumen aus diesen Massen herstellbar sind.

Erfindungsgemäß wird diese Aufgabe durch die eingangs definierten PPE/PA-Formmassen gelöst.

Bevorzugte Ausführungsformen sind den Unteransprüchen zu entnehmen.

Überraschenderweise wurde gefunden, daß die thermische Nachbehandlung die Schmelzeviskosität der Formmassen erhöht, u.z. sowohl bei verstärkten wie auch bei unverstärkten Massen (unabhängig von den jeweils gewünschten Additiven B)).

Zusätzlich wird die andere Blendkomponente PPE und die gute Phasenhaftung der beiden Polymeren nicht beeinflußt.

Als Komponente A) enthalten die erfindungsgemäßen Formmassen 20 bis 80, bevorzugt 30 bis 65 und insbesondere 40 bis 60 Gew.-% eines Polyphenylenethers, welcher gegebenenfalls bis zu 50 Gew.-%, vorzugsweise bis zu 30 Gew.-%, bezogen auf B) durch ein vinylaromatisches Polymer ersetzt sein kann.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität (η_{red}) von 0,2 bis 0,9 dl/g, vorzugsweise von 0,35 bis 0,8 und insbesondere 0,45 bis 0,6, gemessen in einer 0,5 gew.%-igen Lösung in Chloroform bei 25°C nach DIN 53 726.

Geeignete Polyphenylenether a₁) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-di-chlor-1,4-phenylenether), Poly(2-methyl-6-phenyl-1,4-phenylenether, Poly-(2,6-dibenzyl-1,4-phenylen)ether, Poly(2-ethoxi-1,4-phenylenether), Poly-(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-di-propyl-1,4-phenylenether) und Poly(2-ethyl-6-propyl-1,4-phenylenether).

Weiterhin sind Pfropfcopolymere aus Polyphenylenether und vinylaromatischen Polymeren wie Styrol, α-Methylstyrol, Vinyltoluol und Chlorstyrol geeignet.

Bevorzugt werden funktionalisierte oder modifizierte Polyphenylenether eingesetzt, wie sie z.B. aus WO-A 86/02086, WO-A 87/00540, EP-A-222 246, EP-A-223 116 und EP-A-254 048 bekannt sind.

Üblicherweise wird bei deren Herstellung ein Polyphenylenether a₁) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine bessere Verträglichkeit mit dem Polyamid erreicht wird.

Die Modifizierung wird im allgemeinen durch Umsetzung eines Polyphenylenethers a₁) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Bevorzugt wird in den erfindungsgemäßen Formmassen als Komponente A) ein modifizierter Polyphenylenether eingesetzt, der durch Umsetzung von
a₁) 70 - 99,95, vorzugsweise 75 - 95 Gew.-%, eines unmodifizierten Polyphenylenethers,
a₂) 0 - 29,95, vorzugsweise 4,89 - 20 Gew.-%, eines vinylaromatischen Polymeren,
a₃) 0,05 - 30, vorzugsweise 0,1 - 5 Gew.-%, mindestens einer Verbindung aus der Gruppe gebildet aus
   a₃₁) α,β-ungesättigten Dicarbonylverbindungen,
   a₃₂) Amid-Gruppen enthaltenden Monomeren mit einer polymerisierbaren Doppelbindung und
   a₃₃) Lactam-Gruppen enthaltenden Monomeren mit einer polymerisierbaren Doppelbindung,
a₄) 0 - 5, vorzugsweise 0,01 - 0,09 Gew.-%, eines Radikalstarters
wobei sich die Gewichtsprozente auf die Summe von a₁) bis a₄) beziehen, in geeigneten Misch- und Knetaggregaten wie Zweischneckenextrudern erhältlich ist. Die Verweilzeit liegt dabei vorzugsweise im Bereich von 0,5 bis 15 Minuten bei Temperaturen von 240 bis 375°C.

Das vinylaromatische Polymer a₂) ist vorzugsweise mit dem eingesetzten Polyphenylenether verträglich.

Das Molekulargewicht dieser an sich bekannten und im Handel erhältlichen Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere a₂) sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Geeignete Modifiziermittel a₃) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C1- und C₂-C₈-Alkanolen (Monomere a₃₁), die Monooder Diamide dieser Säuren wie N-Phenylmaleinimid (Monomere a₃₂) und Maleinhydrazid. Andere geeignete Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere a₃₃) seien beispielsweise N-Vinylpyrrolidon und (Meth)acryloylcaprolactam genannt.

Als Radikalstarter a₄) seien genannt:

Di-(2, 4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur 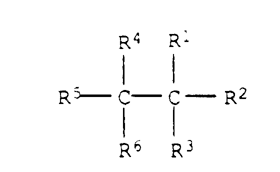 wobei R¹ bis R⁶ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem p-Elektronensystem und Stickstoff, Sauerstoff oder Schwefel als Heteroatomen darstellen. Die Substituenten R1 bis R6 können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Als Komponente B) enthalten die erfindungsgemäßen Formmassen 0 bis 70, bevorzugt bis zu 50 und insbesondere bis zu 40 Gew.-% üblicher Zusatzstoffe und Verarbeitungshilfsmittel. Die Mengenangaben beziehen sich jeweils auf das Gesamtgewicht der Komponenten A) bis C), wobei die Gewichtsprozente der Komponenten A) bis C) zusammen 100 % ergeben.

Es können übliche Schlagzähmodifier B) verwendet werden, die für Polyamide (Komponente C) geeignet sind und Kautschuke B), die üblicherweise Polyphenylenether A) schlagzähmodifizieren.

Als Komponente B) werden die üblichen zur Verbesserung der Zähigkeit von Polyamiden oder Polyphenylenethern eingesetzten schlagzäh modifizierenden Polymeren (auch Schlagzähmodifier, Elastomere oder Kautschuke genannt) verwendet, in Mengen von 0 bis 30, bevorzugt 3 bis 20 und insbesondere 5 bis 15 Gew.%.

Als Kautschuke, die die Zähigkeit von Polyphenylenethern erhöhen, seien z.B. folgende genannt:

Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Auch in Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Krafton®-G-Typen (Shell), die Finaprene®-Typen (Fina) und die Europrene®-SOL-TR-Typen (Enichem) genannt.

Kautschuke, die die Zähigkeit von Polyamiden erhöhen, weisen i.a. zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, a-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.%, vorzugsweise 0,25 bis 15 Gew.%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern B) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weiteren Bestandteil können die erfindungsgemäßen Formmassen 0 bis 60, vorzugsweise 5 bis 40 und insbesondere 10 bis 35 Gew.-% eines faser- oder teilchenförmigen Füllstoffes oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (C) mit einer Schlichte und einem Haftvermittler ausgerüstet sein. Im allgemeinen haben die verwendeten Glasfasern einen Durchmesser im Bereich von 6 bis 20 mm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Die erfindungsgemäßen Formmassen können weiterhin Flammschutzmittel B) in einer Konzentration von 0 bis 20 Gew.-%, bevorzugt von 1 bis 15 Gew.-%, insbesondere 3 bis 10 Gew.-%, bezogen auf das Gesamtgewicht der Formmasse, enthalten.

Geeignete Flammschutzmittel sind z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel B) ist elementarer Phosphor. In der Regel kann der elementare Phosphor mit z.B. Polyurethanen oder Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt sind Kombinationen von elementarem Phosphor mit 1,2,3,4,7,8,9,10,13,13,14,14-Dodecachloro-1,4,4a,5,6,6a,7,-10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Phosphorverbindungen wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die gemäß der vorliegenden Erfindung verwendet werden können, sind solche der folgenden allgemeinen Formel 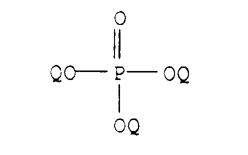 worin Q für gleiche oder verschiedene Reste Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist.

Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi (p-tolyl)phosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Weitere übliche Zusatzstoffe und Verarbeitungshilfsmittel können in Mengen bis zu 20, vorzugsweise bis zu 10 Gew.-%, bezogen auf das Gesamtgewicht der Komponenten A) bis C), enthalten sein.

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen wie Metallflocken, -pulver, -fasern, metallbeschichtete Füllstoffe können ebenfalls mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Als bevorzugten Stabilisator B) können die erfindungsgemäßen Formmassen mindestens eine phosphorhaltige anorganische Säure oder deren Derivate in Mengen bis zu 1000 bevorzugt 30 bis 200 und insbesondere 50 - 130 ppm, bezogen auf den Phosphorgehalt der Verbindungen, enthalten.

Bevorzugte Säuren sind hypophosphorige Säure, phosphorige Säure oder Phosphorsäure sowie deren Salze mit Alkalimetallen, wobei Natrium und Kalium besonders bevorzugt sind. Unter organischen Derivaten dieser Säuren sollen vorzugsweise Esterderivate oben genannter Säuren mit Fettsäuren verstanden werden, wobei die Fettsäuren 12 bis 44 C-Atome, bevorzugt 22 bis 40 C-Atome aufweisen. Als Beispiele seien Stearinsäure, Behensäure, Palmitinsäure oder Montansäure genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Als Keimbildungsmittel können Natriumphenylphosphinat, Aluminiumoxid, Siliziumdioxid, Nylon 22 sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-stearat) oder Esterderivate (z.B. Stearylstearat oder Pentaerythrittetrastearat) sowie Amidderivate (z.B. Ethylen-bis-stearylamid).

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Als Komponente C) enthalten die erfindungsgemäßen thermoplastischen Formmassen 10 bis 80 Gew.-%, bevorzugt 20 bis 70 Gew.-%, insbesondere 25 bis 60 Gew.-% eines niedermolekularen Polyamids mit einer Viskositätszahl von 40 bis 185 ml/g, bevorzugt 100 bis 160 ml/g, und insbesondere 120 bis 145 ml/g gemessen an einer 0,5 gew.-%igen Lösung in konzentrierter Schwefelsäure bei 25°C (gemäß DIN 53 727).

Als Polyamide, die zur Herstellung der Komponente C) verwendet werden können, sind thermoplastische teilkristalline Polyamide zu nennen.

Geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

In der Regel sind diese teilkristallinen Polyamide linear.

Besonders bevorzugt sind Polytetramethylenadipinsäureamid, Polyhexamethylenadipinsäureamid, Polyhexamethylensebacinsäureamid und Polycaprolactam sowie Copolyamide aus Terephthalsäure, Hexamethylendiamin und ε-Caprolactam oder aus Terephthalsäure, Isophthalsäure, ggf. Adipinsäure und Hexamethylendiamin mit mehr als 50 Gew.-% Terephthalsäure/Hexamethylendiamin-Einheiten; insbesondere Polyhexamethylenadipinsäureamid und Polycaprolactam. Es können jedoch auch Mischungen verschiedener Polyamide verwendet werden.

Die Herstellung der niedermolekularen Polyamide oder Polyamid-Präpolymeren mit einer Viskositätszahl von 40 bis 185 ml/g (Komponente C) kann z.B. nach den in den EP-A 129 195, 129 196 und EP-A 299 444 beschriebenen Verfahren erfolgen. Weitere übliche Herstellweisen, welche diskontinuierlich als auch kontinuierlich sein können, sind dem Fachmann bekannt, so daß sich weitere Angaben hierzu erübrigen.

Die niedermolekularen Polyamide oder Polyamid-Präpolymeren weisen vorzugsweise eine Endgruppendifferenz (Differenz zwischen NH₂-Endgruppen und COOH-Endgruppen) von < 70 mmol/kg, bevorzugt 40 mmol/kg, Polyamid auf. Besonders bevorzugt liegt ein geringer Aminoendgruppenüberschuß von 10 bis 30 mmol/kg Polyamid vor. Die Herstellung von Polyamiden mit bestimmten Endgruppenverhältnissen ist dem Fachmann bekannt, so daß sich weitere Einzelheiten hierzu erübrigen.

Nach einer bevorzugten Arbeitsweise leitet man das niedermolekulare Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat (Komponente C) wird bei etwa 20°C über dem Schmelzpunkt der Komponente C) (im Falle von Polyhexamethylenadipamid bei etwa 280°C), bevorzugt in einem Doppelschneckenextruder aufgeschmolzen und mit der Komponente A) sowie gegebenenfalls der Komponente B) gemischt, als Strang ausgetragen, gekühlt und granuliert.

In einer besonders bevorzugten Ausführungsform ist es auch möglich, die Komponente A) und gegebenenfalls B) schon in den Entgasungsextruder zu geben, wobei in diesem Fall der Entgasungsextruder üblicherweise mit geeigneten Mischelementen, wie Kneter, ausgestattet ist. Anschließend wird ebenfalls als Strang extrudiert, gekühlt und granuliert.

Die PPE/PPA Blends unterwirft man danach in der Regel einer weiteren thermischen Behandlung. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die Viskositätszahl des Polyamids die gewünschte VZ von ≥ 200 ml/g bevorzugt 240 und insbesondere ≥ 250 ml/g erreicht. Der Temperaturbereich der Temperung hängt vom Schmelzpunkt der reinen Komponente C) ab. Bevorzugte Temperaturbereiche sind 5 bis 50, vorzugsweise 20 bis 30°C unterhalb des jeweiligen Schmelzpunkts von S). Das erfindungsgemäße Verfahren erfolgt vorzugsweise in einer Inertgasatmosphäre, wobei Stickstoff oder überhitzter Wasserdampf als Inertgas bevorzugt sind.

Die Verweilzeiten betragen im allgemeinen von 0,5 bis 50, vorzugsweise 4 bis 24 Stunden. Die Temperung bietet keine Probleme, da der Polyphenylenether den Molekulargewichtsaufbau des Polyamids nicht behindert. Anschließend werden aus den formmassen mittels üblicher Vorrichtungen für das Blasformen, Profilextrusion und Rohrextrusion Formteile hergestellt.

Die Schmelzviskosität der PPE/PA-Formmassen ist soweit erhöht, daß sich Formkörper Insbesondere glasfaserhaltige mit großen Volumina erstellen lassen, welche eine gleichmäßige Wandstärke über das gesamte Formteil aufweisen. Als Anwendungen seien Kraftstoff-, Schmiermittel- oder Bremsflüssigkeitsbehälter im KFZ genannt.

### Beispiele

### Komponente A

90 Gew.-% Poly-2,6-dimethyl-1,6-dimethyiphenylenether mit einer reduzierten spezifischen Viskosität von 0,6 dl g (1 gew.-%ig in Chloroform bei 25°C),
8 Gew.-% Polystyrol (MFI bei 200°C/5 kg Belastung : 24 g/10 min),
1,95 Gew.-% Fumarsäure und
0,05 Gew.-% 3,4-Dimethyl-3,4-diphenylhexan
wurden in einem Zweischneckenextruder (ZSK 30, Fa. Werner & Pfleiderer) dosiert, in einem ersten Teil unter Verwendung von Knetelementen bei 270°C aufgeschmolzen, in einem zweiten Teil unter Kneten und Verwendung von Knetelementen bei 280°C umgesetzt und anschließend in einer Entgasungszone bei 300°C im Vakuum entgast. Die mittlere Verweilzeit im Extruder betrug 1,5 min.

### Komponente B

- B/1: Natriumphosphit x 5 H₂O (Firma Merck)
- B/2: CuI/KI im Mischungsverhältnis 1:10.
- B/3: Ethylenbisstearylamid
- B/4: Schnittglasfasern (Gevetex® 537 der Firma Vetrotex) mit einem mittleren Faserdurchmesser von 10 µm und einer Länge von 4,5 mm.
- B/5: Styrol-Butadien-Vierblockcopolymer mit einem Styrolgehalt von 41 Gew.-%; Shore A Härte gemäß DIN 53505:87 (Tufprene® A der Firma Asahi Chem.)

### Komponente C (vor der Bearbeitung)

C/1 Polyamid 66 mit einem Zahlenmittel des Molekulargewichts von 22 000 g/mol (Ultramid® A3 der BASF AG);

| | |
|---|---|
| Viskositätszahl (VZ) | 144 ml/g (gemäß DIN 53 727) |
| Endgruppen | 68 mmol/kg NH₂, |
| | 58 mmol/kg COOH |

C/2 PA 66 mit einer VZ von 60 ml/g (Ultramid® A15 der BASF AG)
C/3 PA 66 mit einer VZ von 182 ml/g
C/4 PA 6/6T:
70 Gew.-% Einheiten, die sich von Terephthalsäure/Hexamethylendiamin ableiten und
30 Gew.-% Einheiten, die sich von ε-Caprolactam ableiten.

| | |
|---|---|
| VZ | 125 ml/g (Ultramid® T KR 4351 der BASF AG) |

C/5V PA 66 mit einer VZ von 228 ml/g (Ultramid® A4 der BASF AG)
C/6V PA 66 mit einer VZ von 283 ml/g (Ultramid® A5 der BASF AG).
V = zum Vergleich

### Herstellung der Formmassen

### Beispiele 1 - 6

Die Komponente C/1 wurde auf einem Zweischneckenextruder (ZSK 3C von Werner & Pfleiderer) bei 290°C aufgeschmolzen und mit den Komponenten B/2 (100 ppm Cu bezogen auf die eingesetzte Menge von CuI/KI), 0,3 Gew.-% B/3 und 130 ppm Phosphor, bezogen auf den Phosphorgehalt der Komponente B/1, gemischt (20 kg/h Durchsatz, 200 U/min). Komponente A) wurde über einen Seitenextruder in die Schmelze dosiert. Das Produkt wurde verstrangt, in einem Wasserbad abgekühlt, granuliert und getrocknet. Danach wurde das Granulat bei 175°C in einem Taumlertrockner unter Stickstoff auf die in der Tabelle angegebenen VZ nachkondensiert.

Auf einer Extrusionsblasformmaschine (Fa. Voith) wurden bei 290°C mittels diskontinuierlicher Fahrweise rechteckige Hohlkörper von 18,5 x 18,5 cm Querschnitt und 61 cm Länge (Volumen ca. 21 l, Gewicht zwischen 1 und 2 kg) hergestellt.

### Beispiele 7 - 9

Die Komponente C/2 wurde analog der in den Beispielen 1 - 7 beschriebenen Herstellweise mit den Komponenten B und A konfektioniert, thermisch nachbehandelt und zu Blasformkörpern verarbeitet.

### Beispiele 10 und 11

Die Herstellweise und Verarbeitung entsprach den Beispielen 1 bis 7, jedoch wurde als Polyamid Komponente C/3 eingesetzt.

### Beispiele 12 und 13

Die Herstellweise und Verarbeitung entsprach den Beispielen 1 bis 7, jedoch wurde C/4 als Polyamid eingesetzt, die Konfektionierung erfolgte bei 325°C und die Verarbeitung zu Blasformkörpern bei 325°C.

### Beispiele 14 bis 16

Die Herstellweise und Verarbeitung entsprach den Beispielen 1 - 7, jedoch wurde C/5 V und C/6 V als Polyamid C eingesetzt.

### Meßmethoden:

Die Ermittlung der Wandstärke erfolgt durch Messungen jeweils 10 cm unterhalb bzw. oberhalb des Bodens bzw. Deckels des Hohlkörpers.

An den Produkten wurde der MVR nach IN 53735 bei 280°C/10 kg (Beispiele 12 und 13): 325°C/10 kg) gemessen. Nach Abtrennung der PPE-Phase wurde nach Extraktion mit Toluol die VZ der PA-Phase (0,5 %ig in 96 %iger H₂SO₄ bei 25°C) nach DIN 53 727 gemessen.

Die Ergebnisse der Messungen und die Zusammensetzungen der Formmassen sind der Tabelle zu entnehmen.

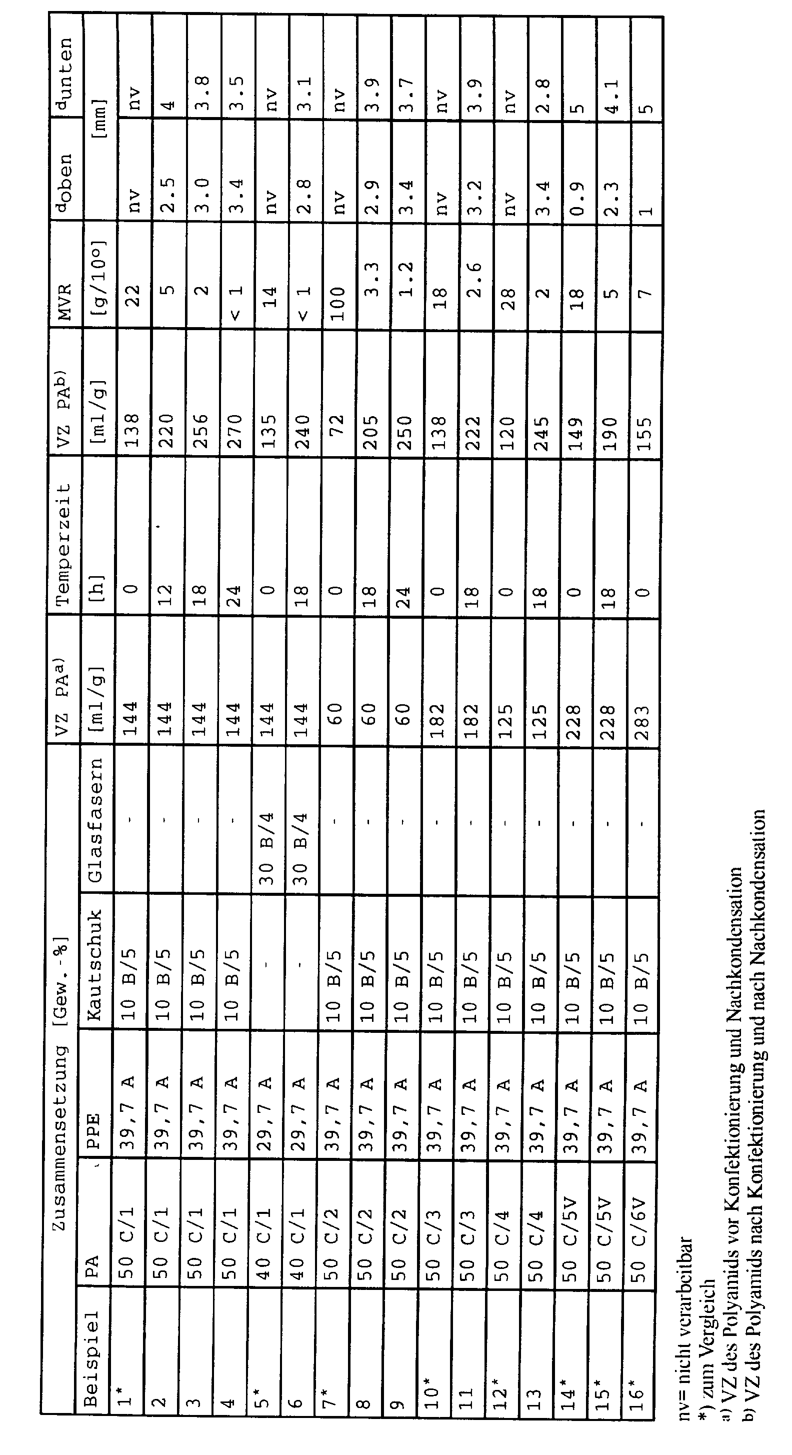

## Patentansprüche

1. Hochmolekulare thermoplastische Formmassen, erhältlich durch Einmischen von
A) 20 - 80 Gew.-% eines Polyphenylenethers und
3) 0 - 70 Gew.-% üblicher Zusatzstoffe und Verarbeitungshilfsmittel
in eine Schmelze von
C) 10 - 80 Gew.-% eines niedermolekularen Polyamids mit einer Viskositätszahl von 40 bis 185 ml/g, gemessen an einer 0,5 gew.-%igen Lösung in konzentrierter Schwefelsäure bei 25°C gemäß DIN 53727,
und anschließender Nachkondensation in fester Phase, wobei man die Nachkondensation bei Temperaturen unterhalb des Schmelzpunktes der reinen Komponente C) unter Inertgasbedingungen thermisch durchführt und wobei das Polyamid C) nach der Nachkondensation in fester Phase eine Viskositätszahl von mindestens 200 ml/g, bestimmt nach Abtrennung der Polyphenylenether-Phase mittels Extraktion mit Toluol an einer 0,5 gew.-%iqen Lösung in 96%iger Schwefelsäure bei 25°C gemäß DIN 53727, aufweist.

2. Hochmolekulare thermoplastische Formmassen nach Anspruch 1, dadurch gekennzeichnet, daß der Polyphenylenether A) bis zu 50 Gew.-%, bezogen auf A), durch ein vinylaromatisches Polymer ersetzt ist.

3. Hochmolekulare thermoplastische Formmassen, nach den Ansprüchen 1 bis 2, dadurch gekennzeichnet, daß der Polyphenylenether A) durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert ist.

4. Hochmolekulare thermoplastische Formmassen, nach den Ansprüchen 1 bis 3, dadurch gekennzeichnet, daß als Komponente 3) eine phosphorhaltige anorganische Säure oder deren Derivate als Stabilisator in Mengen bis zu 1000 ppm verwendet wird.

5. Verfahren zur Herstellung von hochmolekularen thermoplastischen Formmassen gemäß den Ansprüchen 1 bis 4, dadurch gekennzeichnet, daß die Komponente A) und gegebenenfalls B) der Schmelze der Komponente C) zugegeben wird, wobei die Komponente C) eine Viskositätszahl ≤ 185 ml/g aufweist und anschließend diese Mischungen bei Temperaturen von 5 bis 50°C unterhalb des Schmelzpunktes der reinen Komponente C) unter Inertgasbedingungen über einen Zeitraum von 0,5 bis 50 Stunden thermisch nachbehandelt wird.

6. Verwendung von hochmolekularen thermoplastischen Formmassen gemäß den Ansprüchen 1 bis 4 zur Herstellung von Formkörpern durch Blasformen, Profilextrusion oder Rohrextrusion.

7. Blasformkörper, erhältlich aus den hochmolekularen thermoplastischen Formmassen gemäß den Ansprüchen 1 bis 4.

8. Profilextrudate, erhältlich aus den hochmolekularen thermoplastischen Formmassen gemäß den Ansprüchen 1 bis 4.

9. Rohrextrudate, erhältlich aus den hochmolekularen thermoplastischen Formmassen gemäß den Ansprüchen 1 bis 4.

## Claims

1. A high molecular weight thermoplastic molding material obtainable by mixing
A) 20 - 80% by weight of a polyphenylene ether and
B) 0 - 70% by weight of conventional additives and processing assistants
into a melt of
C) 10 - 80% by weight of a low molecular weight polyamide having a viscosity number of from 40 to 185 ml/g, measured in a 0.5% strength by weight solution in concentrated sulfuric acid at 25°C according to DIN 53727,
and subsequently carrying out solid-phase postcondensation, the postcondensation being effected thermally at below the melting point of the pure component C) under inert gas conditions and, after the solid-phase postcondensation, the polyamide C) having a viscosity number of at least 200 ml/g, determined after separation of the polyphenylene ether phase by means of extraction with toluene in a 0.5% strength by weight solution in 96% strength sulfuric acid at 25°C according to DIN 53727.

2. A high molecular weight thermoplastic molding material as claimed in claim 1, wherein up to 50% by weight, based on A), of the polyphenylene ether A) are replaced by a vinylaromatic polymer.

3. A high molecular weight thermoplastic molding material as claimed in claim 1 or 2, wherein the polyphenylene ether A) is modified by incorporating at least one carbonyl, carboxyl, anhydride, amido, imido, carboxylic ester, carboxylate, amino, hydroxyl, epoxy, oxazolyl, urethane, urea, lactam or halobenzyl group.

4. A high molecular weight thermoplastic molding material as claimed in any of claims 1 to 3, wherein a phosphorus-containing inorganic acid or a derivative thereof is used as a stabilizer (as component B)) in amounts of up to 1000 ppm.

5. A process for the preparation of a high molecular thermoplastic molding material as claimed in any of claims 1 to 4, wherein component A) and, if required, B) are added to the melt of component C), component C) having a viscosity number ≤ 185 ml/g, and this mixture is then subjected to a thermal aftertreatment at from 5 to 50°C below the melting point of the pure component C) under inert gas conditions over a period of from 0.5 to 50 hours.

6. Use of a high molecular weight thermoplastic molding material as claimed in any of claims 1 to 4 for the production of moldings by blow molding, profile extrusion or pipe extrusion.

7. A blow-molded article obtainable from a high molecular weight thermoplastic molding material as claimed in any of claims 1 to 4.

8. An extruded profile, obtainable from a high molecular weight thermoplastic molding material as claimed in any of claims 1 to 4.

9. An extruded pipe, obtainable from a high molecular weight thermoplastic molding material as claimed in any of claims 1 to 4.

## Revendications

1. Masses à mouler thermoplastiques de poids moléculaire élevé, que l'on peut obtenir par l'incorporation sous mélange
A) 20 à 80% en poids d'un poly(éther de phénylène) et
B) 0 à 70% en poids d'auxiliaires de mise en oeuvre et d'additifs usuels,
à une masse fondue de
C) 10 à 80% en poids d'un polyamide de faible poids moléculaire, possédant un indice de viscosité de 40 à 185 ml/g, mesuré sur une solution aqueuse à 0,5% en poids dans de l'acide sulfurique concentré, à 25°C, selon la norme DIN 53727
et postcondensation subséquente en phase solide, où l'on entreprend la postcondensation par voie thermique à des températures inférieures au point de fusion du composant C) pur, sous un gaz inerte et où le polyamide C) présente, après la postcondensation en phase solide, un indice de viscosité d'au moins 200 ml/g, déterminé après séparation de la phase au poly(éther de phénylène) par extraction avec le toluène sur une solution à 0,5% en poids dans l'acide sulfurique à 96%, à 25°C, selon la norme DIN 53727.

2. Masses à mouler thermoplastiques de poids moléculaire élevé suivant la revendication 1, caractérisées en ce que le poly(éther de phénylène) A) est remplacé par jusqu'à 50% en poids, par rapport à A), d'un polymère vinylaromatique.

3. Masses à mouler thermoplastiques de poids moléculaire élevé suivant les revendication 1 et 2, caractérisé en ce que le poly(éther de phénylène) A) a été modifié par l'incorporation d'au moins un groupe carbonyle, acide carboxylique, anhydride d'acide, amide d'acide, imide d'acide, ester d'acide carboxylique, carboxylate, amino, hydroxyle, époxy, oxazoline, uréthanne, urée, lactame ou halogénobenzyle.

4. Masses à mouler thermoplastiques de poids moléculaire élevé suivant les revendication 1 à 3, caractérisées en ce que l'on utilise, à titre de composant B), un acide inorganique contenant du phosphore ou ses dérivés à titre de stabilisateur, en proportions s'élevant jusqu'à 1000 ppm.

5. Procédé de fabrication de masses à mouler thermoplastiques de poids moléculaire élevé suivant les revendication 1 à 4, caractérisé en ce que l'on ajoute le composant A) et éventuellement B) à la masse fondue du composant C), où le composant C) présente un indice de viscosité ≤ 185 ml/g et on soumet ensuite ces mélanges à un posttraitement thermique, à des températures de 5 à 50°C en dessous du point de fusion du composant C) pur, sous un gaz inerte et pendant une période qui varie de 0,5 à 50 heures.

6. Utilisation de masses à mouler thermoplastiques de poids moléculaire élevé suivant les revendications 1 à 4, pour la fabrication d'articles moulés par soufflage, par extrusion de profilé ou par extrusion en tube.

7. Articles moulés par soufflage, que l'on peut obtenir à partir des masses à mouler thermoplastiques de poids moléculaire élevé suivant les revendications 1 à 4.

8. Extrudés profilés, que l'on peut obtenir à partir des masses à mouler thermoplastiques de poids moléculaire élevé suivant les revendications 1 à 4.

9. Extrudés tubulaires, que l'on peut obtenir à partir des masses à mouler thermoplastiques de poids moléculaire élevé suivant les revendications 1 à 4.
